# DEMANDE DE BREVET EUROPEEN

(11) **EP 0 562 910 A1**
(43) Date de publication de la demande: **29.09.1993**
(21) Numéro de dépôt: 93400663.6
(22) Date de dépôt: 16.03.1993
(51) Int. Cl.: G01N 25/16, G01B 11/08, G01B 11/16

(54) **Dispositif de mesure de la dilatation thermique d'un échantillon**

(30) Priorité: 26.03.1992 FR 9203659
(71) Demandeur: FRAMATOME CONNECTORS INTERNATIONAL, 92084 Paris La Défense (FR)
(72) Inventeur: Ollivier, Jean-François, F-22230 Merdrignac (FR); Lalaouna, Said, F-72400 La Ferte Bernard (FR); Penha, Manuel, F-72100 Le Mans (FR)
(74) Mandataire: Keib, Gérard

(57) **Abrégé**

La description concerne un dispositif de mesure de la dilatation thermique d'un échantillon (10). Il comporte un moyen (L) pour générer un rayonnement de mesure (1), une pièce de base (2), comportant une rainure de référence (4) et un four (3) comportant un contour de référence externe (38) coopérant avec la rainure de référence (4) et un contour de référence interne (38) coopérant avec un porte-échantillon (5). Une ouverture (36) est destinée au passage de rayonnement de mesure pour mesurer en dilatation le diamètre de l'échantillon (10).

## Description

L'invention a pour objet un dispositif de mesure de la dilatation thermique d'un échantillon, notamment une virole (ou férule) destiné à recevoir une fibre optique.

Une virole pour connecteur à fibre optique comporte un contour extérieur cylindrique très précis ainsi qu'une ouverture axiale très précise disposée dans l'axe de la virole et dont le diamètre, typiquement de 125 microns, correspond au diamètre extérieur d'une fibre optique pourvue de sa gaine optique. Le contour extérieur d'une telle virole doit être cylindrique avec une précision élevée, à savoir inférieure au micron. Le diamètre du contour extérieur étant nominalement de 2500 microns pour une virole standard de connecteur à fibre optique, le niveau élevé de précision que cela implique nécessite que soient réalisées des mesures de dilatation thermique permettant de connaître le comportement du composant.

Dans le cas d'une virole réalisée en matière plastique, une mesure de diamètre réalisée à l'aide de palpeurs mécaniques présente l'inconvénient d'une faible reproductibilité étant donné que le choc des palpeurs avec la surface de la virole est susceptible d'écraser celle-ci sur une distance de l'ordre de quelques microns, ce qui rend la mesure insuffisamment précise.

Il est par ailleurs connu de réaliser une mesure de dimension d'un échantillon à l'aide d'un rayonnement laser. On met en oeuvre pour ce faire une pièce base présentant une rainure de référence, généralement en forme de V, dans laquelle l'échantillon à mesurer est disposé.

La présente invention a pour objet un dispositif de mesure de la dilatation thermique permettant d'obtenir une précision élevée compatible avec celle nécessitée par la mesure des viroles de connecteurs à fibres optiques.

L'invention concerne ainsi un dispositif de mesure de la dilatation thermique d'un échantillon caractérisé en ce qu'il comporte un moyen pour générer un rayonnement de mesure, une pièce de base comportant une rainure de référence, un four comportant un contour de référence externe destiné à coopérer avec ladite rainure de référence et un contour de référence interne destiné à coopérer avec un dit échantillon ainsi qu'une ouverture destinée au passage du rayonnement de mesure.

En disposant ainsi l'échantillon à mesurer à l'intérieur d'une pièce de précision qui constitue également un four pour chauffer l'échantillon à mesurer, on simplifie l'équipement de mesure et en outre on évite de faire monter en température la pièce de base.

La rainure de référence est avantageusement en forme de V.

Dans un mode de réalisation particulièrement avantageux, au moins un dit contour de référence est cylindrique. Le four est alors en contact par deux génératrices du contour extérieur cylindrique avec la rainure en forme de V de la pièce de référence, ce qui assure une perpendicularité de haute précision entre l'axe de la pièce formant le four et le rayonnement laser fourni par le banc de mesure. En outre, un contour de référence interne cylindrique permet un positionnement simple de l'échantillon ou d'un porte-échantillon, lui-même cylindrique, qui vient reposer sous l'effet de la gravité par une génératrice sur la génératrice inférieure du contour de référence interne du four.

Selon un mode de réalisation particulièrement avantageux, le four comporte une première et une deuxième portions d'extrémité dont chacune présente une portion du contour de référence externe et il présente une portion centrale de section inférieure à celle du contour de référence externe et dans laquelle est disposé un élément de chauffage. De ce fait, le chauffage est limité à la portion du four entourant directement l'échantillon à mesurer, ce qui évite une transmission importante de chaleur à la pièce de base.

Un autre problème concernant les pièces cylindriques, est qu'une virole est susceptible de présenter un certain nombre de défauts d'ovalisation, de désalignement, etc, répartis sur tout son contour. Son positionnement dans le contour de référence interne qui se fait, comme on l'a vu ci-dessus, selon une génératrice de cylindre, dépend en pratique des défauts précités et est de ce fait susceptible de fausser la mesure, notamment en raison du fait que la virole n'est alors pas forcément absolument perpendiculaire à la direction du rayonnement lumineux. Il en résulte dans ce cas, que le diamètre mesuré est supérieur au diamètre réel et que les mesures de dilatation ne peuvent pas s'accompagner en même temps d'une mesure de diamètre très précise.

Dans le but d'éviter cet inconvénient, le dispositif de mesure selon l'invention comporte un porte-échantillon présentant un profil de référence externe destiné à coopérer avec ledit contour de référence interne et un élément de référence destiné à recevoir l'échantillon. De ce fait, on évite que l'échantillon soit en contact avec le contour de référence interne, ce qui évite au moins dans une large mesure les inconvénients précités.

Le profil de référence externe est avantageusement cylindrique et présente une section inférieure à celle du contour de référence interne.

Pour limiter les mouvements de convection de l'air à l'intérieur du four, il est avantageux de disposer l'ouverture de passage du rayonnement de mesure en-dessous de l'axe longitudinal du four.

L'invention concerne également un procédé de mesure de la dilatation thermique d'un échantillon caractérisé en ce qu'il met en oeuvre un dispositif de positionnement tel que défini ci-dessus avec les étapes suivantes :
- disposer le contour de référence externe du four dans la rainure de référence de la pièce de base,
- disposer un échantillon à l'intérieur du four de manière qu'il soit positionné avec précision par rapport au contour de référence interne,
- mettre en température le four et mesurer une dimension de l'échantillon à au moins une température et au moins une position de l'échantillon.

D'autres caractéristiques et avantages de l'invention seront mieux compris à la lecture de la description qui va suivre, donnée à titre d'exemple non limitatif, en liaison avec les dessins qui représentent :
- la figure 1a, un four selon l'invention en coupe longitudinale avec un échantillon,
- la figure 1b, une coupe transversale d'un four selon l'invention disposé dans une pièce de base,
- les figures 2a, 2b, 2c et 3 respectivement en vue de droite, en coupe longitudinale, en vue de gauche et en perspective, un porte-échantillon selon un mode de réalisation de l'invention.

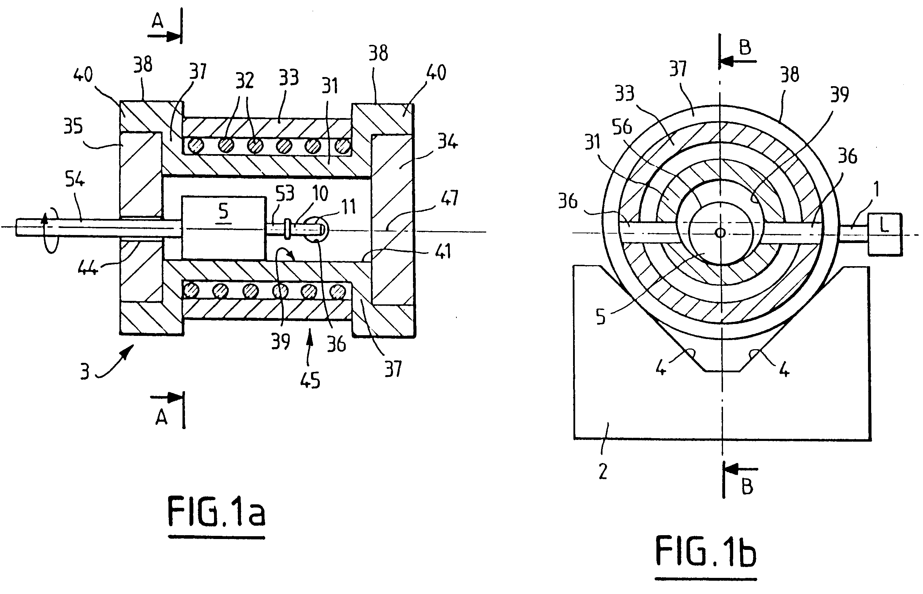

Selon les figures 1a et 1b, une pièce de base 1 comporte une rainure en forme de V dans laquelle est disposé un four désigné par le repère général 3 et comportant un contour cylindrique externe 38 usiné avec précision, en particulier avec une précision inférieure au micron. Le corps du four 3, en particulier en matériau thermique conducteur, présente une section cylindrique centrale 31 dont la face interne présente un contour de référence cylindrique 39 usiné avec précision, en particulier avec une précision de l'ordre d'un micron et coaxial avec une grande précision avec le contour 38, notamment avec une précision meilleure que le micron. Le corps du four 3 est conçu de manière à présenter une isolation thermique par rapport à la pièce de base 2. Le contour cylindrique 38 est en deux parties disposées aux extrémité de la portion centrale 31 et sur un diamètre supérieur à celui-ci. Ceci définit une gorge annulaire 45 dans laquelle sont disposés un élément de chauffage 32 et un élément cylindrique thermiquement isolant 33 qui l'entoure. En outre, des éléments thermiquement isolants (34, 35) sont disposés aux extrémités longitudinalement du four 3. L'un d'entre eux (35) est amovible et présente une ouverture 44 permettant de manipuler un porte-échantillon 5 (voir plus loin). L'échantillon 10 mesuré est positionné de manière à pouvoir être intercepté par un faisceau lumineux 1 envoyé dans l'axe d'une ouverture 36 transversale du four et qui traverse de part en part la portion centrale 31, l'élément de chauffage 32 et le cylindrique isolant 33. Il peut s'agir en particulier d'un rayonnement produit par un banc de mesure dimensionnel par ombroscopie laser connu en soi, et commercialisé sous la dénomination "LASERMIKE" par la société O.R.C-77680 ROISSY EN BRIE, en particulier le modèle 183-100 comportant un laser L à hélium Néon fournissant un faisceau de longueur d'ondes 632,8 mm formant un "rideau laser" grâce à la mise en oeuvre d'un miroir rotatif et d'une lentille collimatrice (non représentée). Le faisceau 1 est envoyé perpendiculairement à l'axe longitudinal de la rainure de référence 4. L'introduction d'un échantillon 10 à mesurer crée un segment d'ombre qui génère un signal électrique dont la durée est proportionnelle à la dimension de l'objet à mesurer, cette durée étant en rapport avec la vitesse de balayage du faisceau laser 1. Le signal électrique est décodé et permet de restituer la dimension de l'échantillon, ici le diamètre avec une résolution de l'ordre de 0,2 microns, ce qui permet de faire des mesures de dilatation thermique en contrôlant la température du four à l'aide d'une sonde 47.

On remarquera que l'axe de l'ouverture 36 est disposé légèrement en-dessous de l'axe longitudinal du four, de manière à éviter les mouvements de convexion dans celui-ci susceptibles de créer des inhomogénéités thermiques. En outre, la disposition de l'isolation thermique 33, 34, 35 autour de la portion centrale du four qui entoure l'échantillon permet d'éviter que le contour externe 38 ne s'échauffe notablement et vienne perturber la précision de la mesure, notamment en échauffant localement la pièce de base 2.

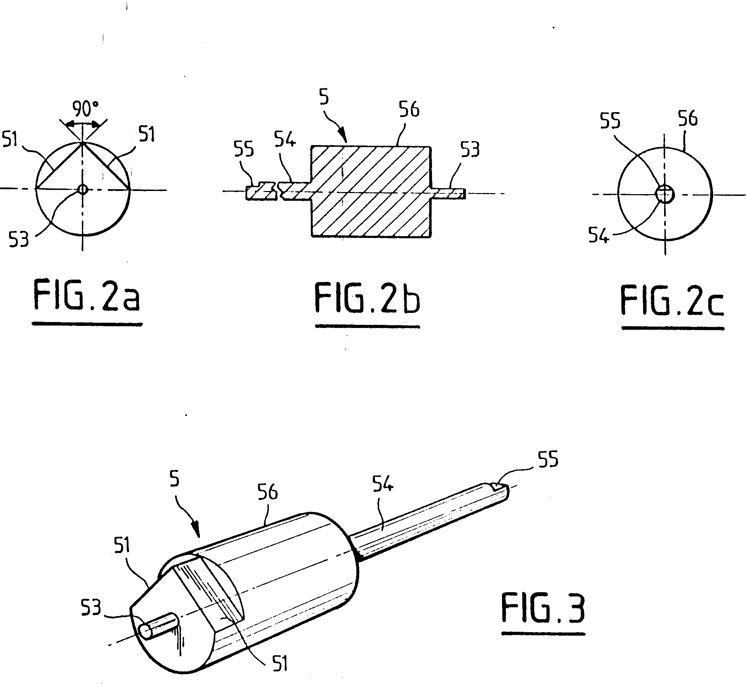

Selon les figures 2a à 2c et 3, un porte-échantillon 5 comporte à une extrémité un axe 53 usiné avec précision et coaxial à mieux d'un micron près avec son contour extérieur cylindrique 56. A l'autre extrémité du porte-échantillon 5, une pige cylindrique 54 échancrée à son extrémité en 55 permet de déplacer l'échantillon 10 manuellement ou à l'aide d'un mécanisme automatique. La pige 54 traverse à cet effet l'ouverture 44 pratiquée dans le couvercle isolant 35. L'échancrure 55 permet un repérage angulaire visuel.

Le porte-échantillon 5 (voir en particulier la figure 1b), est en contact par une de ses génératrices avec la génératrice inférieure 41 du contour de référence interne 39 sous l'action des forces de gravité. L'ouverture centrale (de diamètre nominal 0,9 mm pour une virole pour connecteur à fibres optiques) d'une virole (ou férule) 10 est emmanchée à l'extrémité de la portion cylindrique 53 et le contour externe 11 de la virole 10 est intercepté par le faisceau lumineux 1 de manière à en mesurer le diamètre (par exemple 2500 microns pour une virole pour connecteur à fibres optiques).

Pour effectuer une mesure de dilatation thermique, le porte-échantillon 5 portant une virole à mesurer 10 est introduit à l'intérieur du four 3 qui est refermé. On réalise ensuite une ou plusieurs mesures à une ou plusieurs températures en déplaçant éventuellement l'échantillon 10 dans le four 3 à l'aide de la portion cylindrique 54 qui dépasse de l'ouverture 44 vers l'extérieur du four. Il est ainsi possible de mesurer la dilatation d'un échantillon ainsi que la précision avec laquelle il retrouve sa côte nominale après un cycle thermique.

## Revendications

1. Dispositif de mesure de la dialation thermique d'un échantillon, caractérisé en ce qu'il comporte :
- un moyen (L) pour générer un rayonnement de mesure (1),
- une pièce de base (2) comportant une rainure de référence (4),
- un four (3) comportant un contour de référence externe (38) destiné à coopérer avec ladite rainure de référence (4) et un contour de référence interne destiné à coopérer avec un dit échantillon ainsi qu'une ouverture (36) destinée au passage du rayonnement de mesure (1).

2. Dispositif selon la revendication 1, caractérisé en ce que la rainure de référence (4) est en forme de V.

3. Dispositif selon une des revendications 1 ou 2, caractérisé en ce qu'au moins un dit contour de référence (38, 39) est cylindrique.

4. Dispositif selon une des revendications 1 à 3, caractérisé en ce que le four (3) comporte une première et une deuxième portions d'extrémité (46) dont chacune présente une portion du contour de référence externe (38) de section inférieure à celle du contour de référence externe (38) et dans laquelle est disposé un élément de chauffage (32).

5. Dispositif selon une des revendications précédentes, caractérisé en ce qu'il comporte un porte-échantillon (5) présentant un profil de référence externe (56) destiné à coopérer avec ledit contour de référence interne (39) et un élément de référence (53) destiné à recevoir un dit échantillon.

6. Dispositif selon la revendication 5, caractérisé en ce que ledit rayonnement de mesure est agencé pour mesurer le diamètre de l'échantillon (10).

7. Dispositif selon la revendication 6, caractérisé en ce que le profil de référence externe (56) est cylindrique et présente une section inférieure à celle dudit contour de référence interne (39).

8. Dispositif selon une des revendications 6 ou 7, caractérisé en ce qu'il présente une pièce (35) amovible disposée à une extrémité du four et comportant un passage (44) agencé de manière à être traversée par un prolongement (54) du porte-échantillon (5) permettant le déplacement de ce dernier.

9. Dispositif selon une des revendications précédentes, caractérisé en ce que le contour de référence externe (38) et le contour de référence interne (39) du four font partie d'une même pièce constituant un corps du four (3).

10. Dispositif selon une des revendications précédentes, caractérisé en ce que la majeure partie de la surface externe du four (3) comporte un matériau thermiquement isolant (33, 34, 35).

11. Dispositif selon une des revendications précédentes, caractérisé en ce que ladite ouverture (36) est située en-dessous d'un axe longitudinal du four.

12. Procédé de mesure de la dilatation thermique d'un échantillon, caractérisé en ce qu'il met en oeuvre un dispositif de positionnement selon une des revendications précédentes avec les étapes suivantes :
- diposer le contour de référence externe (38) du four (3) dans la rainure de référence (4) de la pièce de base (2),
- disposer un échantillon (10) à l'intérieur du four (3) de manière qu'il soit positionné avec précision par rapport au contour de référence interne (39),
- mettre en température le four (3) et mesurer une dimension de l'échantillon (10) à au moins une température et au moins une position de l'échantillon (10).
